# EUROPEAN PATENT SPECIFICATION

(11) **EP 1 900 153 B1**
(45) Date of publication and mention of the grant of the patent: **22.02.2012**
(21) Application number: 05756460.1
(22) Date of filing: 04.07.2005
(51) Int. Cl.: H04L 12/28, G08C 17/02, H04L 12/24, H04L 29/12

(54) **SYSTEM AND METHOD FOR OPERATING A MASTER UNIT AND A PLURALITY OF SLAVE UNITS**
SYSTEM UND VERFAHREN ZUM BETRIEB EINER MASTER-EINHEIT UND MEHRERER SLAVE-EINHEITEN
SYSTEME ET PROCEDE D'EXPLOITATION D'UNE UNITE MAITRE ET D'UNE PLURALITE D'UNITES ESCLAVES

(43) Date of publication of application: 19.03.2008
(73) Proprietor: VKR Holding A/S, 2970 Hørsholm (DK)
(72) Inventor: BYBERG, Henrik, Raun, DK-3450 Allerød (DK); EBBE, Ulrik, Vagn, DK-2670 Greve (DK)
(86) International application number: PCT/DK2005/000466
(87) International publication number: WO 2007/003189

(56) References cited:
- EP-A- 1 038 496
- WO-A-2005/041146

## Description

### Field of the invention

The invention relates to a system comprising at least one master unit and a plurality of slave units, wherein said at least one master unit comprises means for transmitting control signals to said slave units via radio frequency channels, said slave units each being provided with a unique address and each being associated with a controllable device.

### Background of the invention

In control systems of the of the above-mentioned type it is usually a time-consuming and - at times - a confusing job for the user to set-up a system wherein a remote control is used for operating a plurality of devices.

In the prior art, systems have been described by means of which an enhanced user-friendliness has been aimed at and achieved. An example of such a system is described in EP 1 340 198 B1, wherein a number of units may be associated with a remote control during an initial configuration procedure. After this, a group configuration may be performed, where the units may be selected one by one and assigned to a certain group. It will be understood that since all units that has to be allocated to a group, must be handled individually, the procedure may be time-consuming if many units are involved in the process.

A further example of a prior art control system is disclosed in WO 2005/041146 A.

Thus, it is an objective of the invention to provide such a system which has an enhanced user-friendly, and by means of which it will be easy to perform an allocation of the involved units to specified groups.

Further, it is an objective of the invention to provide such a system that reduces the work involved when establishing e.g. groupings of controllable devices and thus also reduces the time necessary for performing such a configuration.

It is also an objective of the invention to provide such a system that facilitates the time-saving features presented by e.g. a home automation system in a manner, whereby the user may take advantage of these without having to be faced with a relatively large number of relatively complex programming steps.

Thus, it is generally the objective of the invention to enhance the everyday comfort of the user, e.g. by motivating the user to configure the available controllable devices in a home automation system in a manner adapted to the needs of the user.

These and other objectives are achieved by the invention as explained in further detail in the following.

### Summary of the invention

The invention relates, as specified in claim 1, to a system comprising at least one master unit and a plurality of slave units, wherein said at least one master unit comprises means for transmitting control signals to said slave units via radio frequency channels, said slave units each being provided with a unique address and each being associated with a controllable device, and wherein said at least one master unit comprises means for configuring said slave units addressable by said master unit in a number of sectors, wherein said master unit further is designed in such a manner that when a slave unit is allocated to a sector, one or more further slave units may automatically be allocated to the same sector in dependence on properties related to said slave units.

Here it will be understood that the term "sector" will include any grouping of the available units and that sectors may be overlapping each other. As further explained below, a sector may in this context be defined as for example a group, a room and a zone.

Hereby, it is achieved that a set-up procedure that has to be undertaken by the user when such a remote control system is taken into use, is relieved considerably since in many instances it is predetermined which slave units or devices are logically associated to one and the same sector. For example, if the user desires to create a room-configuration and starts with the selection of e.g. windows that are located in the room, the system will facilitate that other devices associated with the selected windows, e.g. curtains, blinds, etc. are automatically also associated with the room that is being created.

Favourable embodiments are defined in the dependent claims 2 to 13. Preferably, said properties related to said slave units may relate to the type of device associated with the slave unit, the location of the slave unit and/or the device, and/or another commonality linking said slave units.

Hereby a set-up procedure may be made easy and quickly if for example it is determined in advance that slave units related to the same piece of building structure, e.g. the same door or window, must be allocated to one and the same sector. It will of course be understood that such an automatic grouping may be overruled by the user since he/she may manually alter the grouping afterwards, e.g. move a certain slave unit from the sector, in which it has been placed in a preceding configuration procedure, to another sector. Further, the commonality between slave units may relate to other factors such as e.g. in instances where a number of slave units or rather the devices, to which they are coupled, share one or more components, such as for example the power supply, cf. for example the system disclosed in WO 03/042480 A2. It will obvious that other manners of defining a commonality that will infer a logic connection may be thinkable.

According to a preferable embodiment, said means of said master unit for configuring said slave units may be designed in order to perform in an automatic manner.

Hereby a set-up procedure may be made relatively easy and quickly in a user-friendly manner where the involved slave units will be arranged in such a manner that a following manual editing will be reduced to a minimum.

According to a further preferable embodiment, said predefined manner, in which said slave units may be automatically arranged, may comprise an arrangement in consideration of the property of the device associated with the slave unit, in such a manner that slave units having similar properties are arranged in a consecutive manner, e.g. with a unique identification comprising a label and a number.

Hereby it is achieved that the controllable slave units that are associated with e.g. one and the same window, may be provided with corresponding labels and/or numbers, possibly but not necessarily the same number, for example with "Window operator no. 3", "Blinds no. 3" and "Awning no. 3" being the equipment placed at the same window.

Preferably, said automatic allocation of one or more slave units that have a property in common with a slave unit that has been allocated manually, may be overruled.

Thus, if the user finds that a slave unit has been automatically assigned to a sector, e.g. a group, a room or a zone, which the user is in the process of creating, and the user is of the opinion that the specific unit will not form part of the sector that he/she intends to create he/she may by a simple manual operation, e.g. a key-operation on the master unit, reject the specific slave unit.

Advantageously, said common property linking two or more slave units together may be registered in a storage facility of said master unit.

When an initial configuration is performed or when an update is performed, for example when a new device is introduced to the system, the commonality may be registered in connection with the registering of addresses, types etc., for example the fact that two units share the same power source, the same RF-receiver, the same subnet etc. Thus, the master unit may thus, when a certain unit is assigned to a specific sector, for example a group, easily find the other units as well and assign these.

Advantageously, said master unit may be configured for facilitating a naming and/or re-naming of slave units and/or sectors such as for example groups, rooms, zones etc.

Hereby, a further enhanced user-friendliness is obtained, since the user may relatively easy use names, labels etc. that obviously informs the user of e.g. the nature or property of e.g. a device or a group that is selected. For example, the user will be able to rename the devices that are automatically named e.g. "Window operator 2" into "Kitchen window operator" etc. by means of the functions of the master unit, whereby the use of the master unit will be straightforward. Similarly applies for groups, rooms, zones etc, where for example "Room 3" may be renamed into "Living Room", etc.

The invention also relates to, as specified in claim 14, a method for operating a system comprising at least one master unit and a plurality of slave units, wherein said at least one master unit comprises means for transmitting control signals to said slave units via radio frequency channels, said slave units each being provided with a unique address and each being associated with a controllable device, and whereby said slave units addressable by said master unit are configured in a number of sectors, whereby, when a slave unit is allocated to a sector, one or more further slave units may automatically be allocated to the same sector in dependence on properties related to said slave units.

Here it will be understood that the term "sector" will include any grouping of the available units and that sectors may be overlapping each other. As further explained below, a sector may in this context be defined as for example a group, a room and a zone.

Hereby, it is achieved that a set-up procedure that has to be undertaken by the user when such a remote control system is taken into use, is relieved considerably since in many instances it is predetermined which slave units or devices are logically associated to one and the same sector. For example, if the user desires to create a room-configuration and starts with the selection of e.g. windows that are located in the room, the system will facilitate that other devices associated with the selected windows, e.g. curtains, blinds, etc. are automatically also associated with the room that is being created.

Favourable embodiments are defined in the dependent claims 15 to 32. Advantageously, said properties related to said slave units may relate to the type of device associated with the slave unit, the location of the slave unit and/or the device, and/or another commonality linking said slave units.

Hereby a set-up procedure may be made easy and quickly if for example it is determined in advance that slave units related to the same piece of building structure, e.g. the same door or window, must be allocated to one and the same sector. It will of course be understood that such an automatic grouping may be overruled by the user since he/she may manually alter the grouping afterwards, e.g. move a certain slave unit from the sector, in which it has been placed in a preceding configuration procedure, to another sector. Further, the commonality between slave units may relate to other factors such as e.g. in instances where a number of slave units or rather the devices, to which they are coupled, share one or more components, such as for example the power supply, cf. for example the system disclosed in WO 03/042480 A2. It will obvious that other manners of defining a commonality that will infer a logic connection may be thinkable.

According to a further preferable embodiment, said means of said master unit for configuring said slave units may perform in an automatic manner.

Hereby a set-up procedure may be made relatively easy and quickly in a user-friendly manner where the involved slave units will be arranged in such a manner that a following manual editing will be reduced to a minimum.

According to a preferable embodiments, said predefined manner, in which said slave units may be automatically arranged, may comprise an arrangement in consideration of the property of the device associated with the slave unit, in such a manner that slave units having similar properties are arranged in a consecutive manner, e.g. with a unique identification comprising a label and a number.

Hereby it is achieved that the controllable slave units that are associated with e.g. one and the same window, may be provided with corresponding labels and/or numbers, possibly but not necessarily the same number, for example with "Window operator no. 3", "Blinds no. 3" and "Awning no. 3" being the equipment placed at the same window.

Advantageously, said automatic allocation of one or more slave units that have a property in common with a slave unit that has been allocated manually, may be overruled.

Thus, if the user finds that a slave unit has been automatically assigned to a sector, e.g. a group, a room or a zone, which the user is in the process of creating, and the user is of the opinion that the specific unit will not form part of the sector that he/she intends to create he/she may by a simple manual operation, e.g. a key-operation on the master unit, reject the specific slave unit.

Preferably, said common property linking two or more slave units together, may be registered in a storage facility of said master unit.

When an initial configuration is performed or when an update is performed, for example when a new device is introduced to the system, the commonality may be registered in connection with the registering of addresses, types etc., for example the fact that two units share the same power source, the same RF-receiver, the same subnet etc. Thus, the master unit may thus, when a certain unit is assigned to a specific sector, for example a group, easily find the other units as well and assign these.

Advantageously, said master unit may be configured for facilitating a naming and/or re-naming of slave units and/or sectors such as for example groups, rooms, zones etc.

Hereby, a further enhanced user-friendliness is obtained, since the user may relatively easy use names, labels etc. that obviously informs the user of e.g. the nature or property of e.g. a device or a group that is selected. For example, the user will be able to rename the devices that are automatically named e.g. "Window operator 2" into "Kitchen window operator" etc. by means of the functions of the master unit, whereby the use of the master unit will be straightforward. Similarly applies for groups, rooms, zones etc, where for example "Room 3" may be renamed into "Living Room", etc.

### The figures

The invention will be explained in further detail below with reference to the figures of which
- fig. 1: shows in a schematic manner a control system comprising a number of controllable devices in a house or a building,
- fig. 1a: shows in an enlarged view an illustration of controllable devices that may be associated with a window,
- fig. 2: shows an embodiment of a remote control or master unit in accordance with the invention,
- fig. 3: illustrates the establishing of rooms in the control system,
- fig. 4: illustrates the division or grouping of controllable devices into sectors in accordance with a further embodiment, and
- fig. 5: shows an example of a number of devices that are linked by a common feature.

### Detailed description

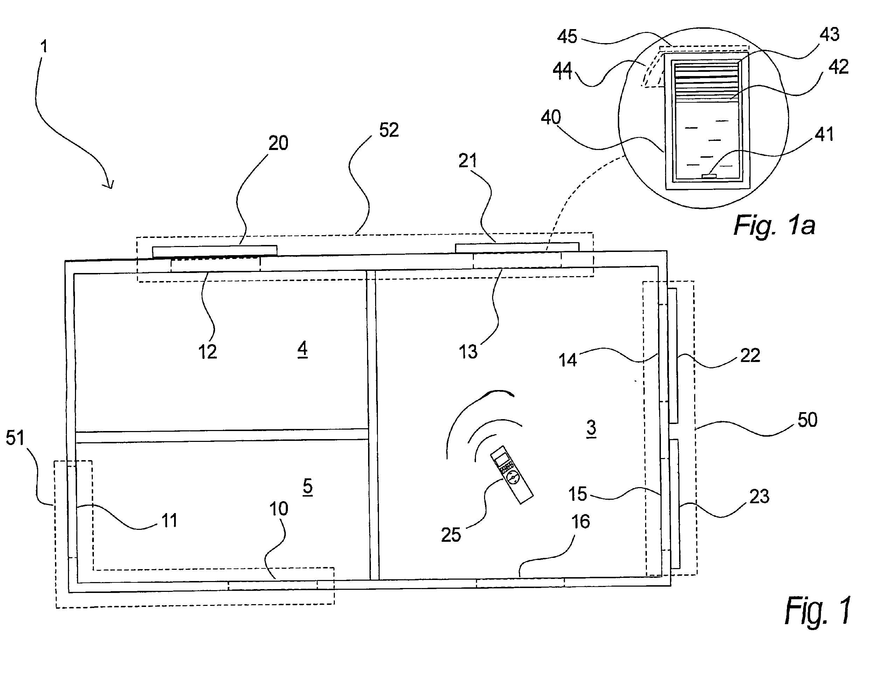

An example of a control system according to an embodiment of the invention, e.g. a home automation system or part thereof, is illustrated in fig. 1. Here, a building, a house, an apartment or the like 1 is illustrated in a schematic manner, wherein a number of devices, e.g. equipment and fittings, which are controlled by a system in accordance with the invention, are furthermore illustrated in a general manner.

The house or apartment 1 may comprise a number of rooms, for example the rooms 3, 4 and 5, and in these rooms a number of windows 10, 11, 12, 13, 14, 15 and 16 may be located. Further, some of these windows may be provided with awnings 20, 21, 22 and 23 as also illustrated. It will be understood that these pieces of equipment are only examples of devices that may be controlled by means of the system, e.g. by means of one or more remote controls 25. Such remote controls are also referred to as master units in the following.

Thus, it will be understood that a window 40 may as shown in fig. 1a comprise e.g. a window actuator, operator or opener 41, a Venetian blind 42 that may be operated by drive means 43 and an awning 44 placed outside the window and operated by drive means 45.

Other examples of devices and equipment that may be controlled by such a system are motorized shutters, blinds and curtains, garage doors, roof windows, heating and cooling systems, alarms, lighting equipment, locks etc.

The devices, equipment etc. that are controlled by means of the system, are associated with slave units, e.g. means for receiving control signals from the remote control(s) 25 and for operating in accordance with received signals. Such means may comprise radio frequency receiving and transmitting means, although it will be understood that some devices may be connected by e.g. a wire bus that may serve to transmit signals from a common RF receiver to the respective slave units associated with the respective devices etc.

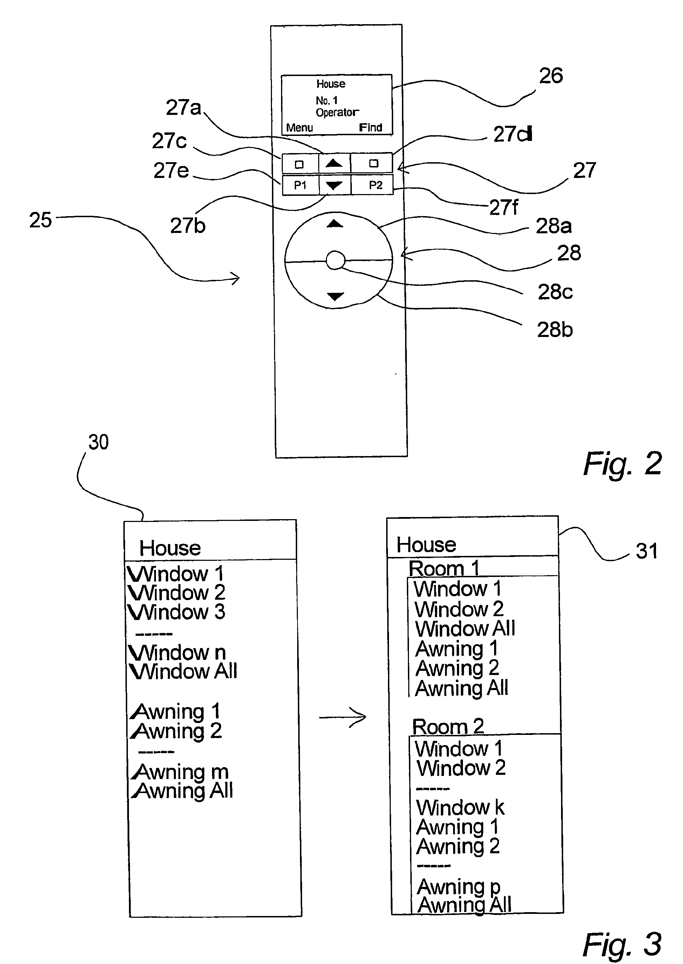

An example of a remote control or master unit 25 is shown in further detail in fig. 2. This remote control comprises RF receiving and transmitting means, a power source such as a battery, storing means, control means etc., and further as shown in fig. 2, the remote control comprises operating means in the form of a display 26, an operating keypad 27 for e.g. displaying information on the display 26, for selecting options, devices etc. and control keys 28 for e.g. operating a selected device.

When a system according to the invention has been installed, an initial set-up or configuration must be performed whereby e.g. an automatic registration of the devices is performed. This may be initiated by means of the remote control 25, e.g. by means of the operating means. Such an automatic registration may involve the transmittal of a unique code from the remote control to all remote-controlled devices, e.g. slave units that are in proximity of the remote control 25 cominunication-wise. In accordance with a predefined procedure, for example as described in EP 1 340 198 B1, the slave units will during this procedure transmit a response signal to the remote control 25, containing information in the form of an address and the type of the slave unit, e.g. a window operator, an awning, blinds etc.

The exchange of addresses and of the code may take place by the exchange of an address and of the code being completed between one slave unit and the master unit/remote control 25 before carrying out the exchange between the following slave units and the remote control and this initiation process may continue sequentially until the last of the slave units has transmitted its address and type and has received the code. The sequence of configuration of the respective units may be determined in various ways and may e.g. be determined by the units being susceptible to the initiation signal at different time intervals which may be mutually independent and potentially randomly divided between the units. The unit with which the susceptible time interval and an initiation signal first coincide will thus be configured first etc.

Obviously, such an initial configuration procedure may be performed in other manners.

When the auto configuration has been completed, the system is ready for operation. The remote control 25 has now stored a list of devices including the address for each and the type, e.g. window operator, blind, awning light etc.

Furthermore, the master unit is configured for arranging the slave units or devices, which have now been associated with the master unit, in such a manner that the slave units are shown in a list on the display 26 assembled in accordance with the type of equipment and with a numbering, e.g. showing first window operator no. 1 - 7, blind no. 1 - 5, awning no. 1 - 4 etc. The user may for example scroll up and down this list, e.g. using the navigation keys 27a and 27b, until a device is found and selected, in which case the device may be operated by means of the keys 28a, 28b and 28c.

In order to make the operation of the system easy and logic, the master unit 25 facilitates a division or grouping into sectors, e.g. groups of the available controllable units, which will be further explained in the following.

As long as the available controllable units are arranged as described above the display means 26 of the master unit will involve only two levels, i.e. "House", which, when selected, will be replaced by the list of all units, or, if a "Find" command is used, the desired type can be found before going into the number-level. This is illustrated in fig. 3, where the box 30 represents this arrangement of the available units. Here, it is also shown that when more than two units of the same type is present, the master unit has automatically created a "All"-group, for example "All window operators".

First, a room may be defined, for example the room 3 in fig. 1.

This may be done by selecting a "Menu", and here select a menu-item, where a sector such as e.g. a room can be created. Here, the individual units may be selected and allocated to the room, i.e. by pressing the key 27c to enter the unit in the "room". It is noted that when a device or unit is selected, it is possible to observe which unit has been selected by pressing the control keys 28 for a brief period of time. Further units can be selected and added to the "room" as described, until the "room" is finally stored as e.g. "Room 1". This is illustrated in fig. 3 with the box 31.

When a room has been created, the master unit will offer to save all remaining units in a room, e.g. "Room 2" as show in fig. 3, or, if this is refused, the display will return to the list from which remaining products/units can be selected for a new room, etc. It is noted that when units has been selected for a room and the room is stored, the units are automatically renumbered as also indicated in fig. 3.

As explained, a "Room" may comprise the controllable units in a specific room, for example the room 3 in fig. 1. Here, the window operators 13 - 16 are selected, the awnings 21 - 23 and, if other types of equipment are provided, for example blinds, roller shutters, light etc, these may be included as well. When the room has been established, which as explained above means that at least one more "room" is created, the master unit may now involve one more level. When "House" is selected, it will according to his embodiment be possible to choose between e.g. "Room 1" and "Room 2" as illustrated with the box 31 in fig. 3. Here after, it will be possible to select all units of a certain type or it will be possible to scroll between the units in the room.

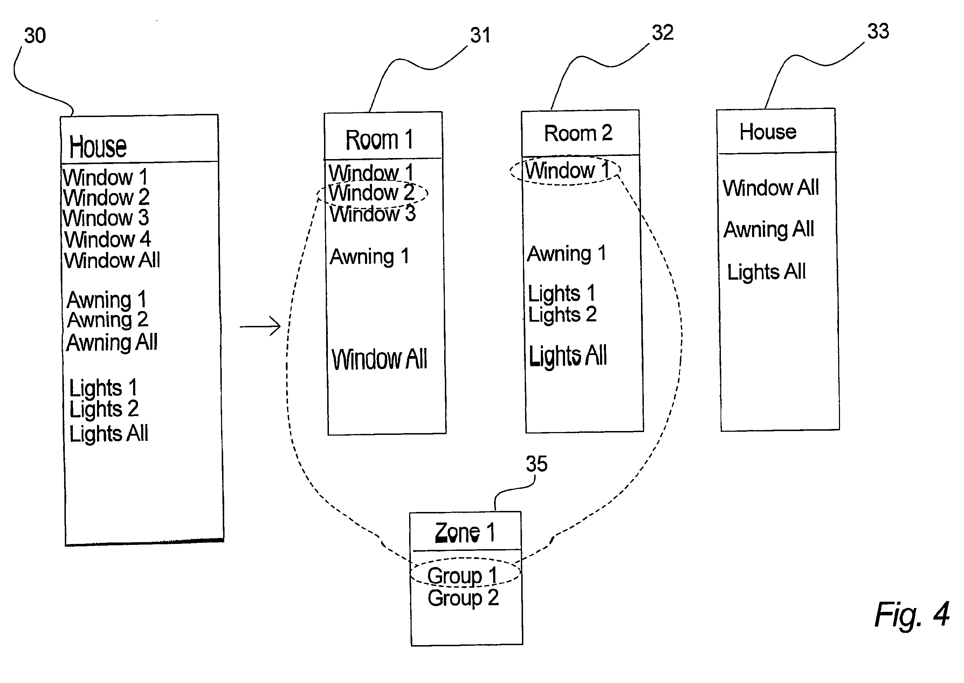

Another manner of arranging the division or grouping of controllable devices into sectors is illustrated in fig. 4.

After the initial auto-configuration a listing as shown at 30 will be available to the user, comprising four windows, three awnings, two lights and further three "all"-groups.

The user now creates a room, "room 1", as shown at 31 comprising three windows and one awning. As mentioned above, an "all" group is also automatically created when the room is stored. Further, the remaining devices are assigned to a "room" as shown at 32. Now, when the user wants to operate the devises, the user may select "room", in which case he/she will be able to select one of the two rooms and subsequently the devices and group(s) comprised in the room.

Furthermore, it will be possible for the user instead to choose the "house" as indicated at 33, in which case the user will be presented with the option of selecting a particular type of device and a specific one of these devices etc.

However, the creation of a sector in the form of a zone is also illustrated in fig. 4. A zone may be defined as a group that is created across the already defined rooms.

If for example the user selects e.g. "window 2" from "room 1" and "window 1" from "room 2" and wishes to create a group consisting of these, a zone 35 will be created, e.g. "zone 1", which comprises a group, "group 1" consisting of the two windows.

As mentioned above, such a zone may be renamed, for example into "south zone", whereby the windows in "group 1" will be identified as the windows placed in this zone.

As shown in fig. 1 as described in connection with fig. 4, it may further be possible to create a group consisting of a number of units of similar or dissimilar types in a specific room, for example a group 50 consisting of the awnings 22 and 23 in the room 3 or a group 51 consisting of the window operators for the windows 10 and 11 in the room 5.

As further shown in fig. 1, it is possible to create a special grouping which will be referred to as a "zone" for the purposes of this application. Such a zone comprises units of the same type or different types, but located in different "rooms". This is illustrated in fig. 1 with the zone 52 consisting for example of the awning 20 located in the room 4 and the awning 21 in the room 3. When such a zone has been created, it is made possible to operate these devices simultaneously, for example the awnings located at the south-facing wall. It should be mentioned that zones may not only cover different rooms in the same level, but also rooms at different levels, for example in a house having a ground floor and a first floor, e.g. an attic.

When creating such groupings, it may be necessary to select all units that has to be placed in a specific grouping, e.g. in a room. However, in accordance with the invention, the effort in placing the units in e.g. rooms may be lessened considerably.

As indicated in fig. 1, a window 13 may be equipped with a window operator 41, a blind operator 43 and an awning operator 45. Further equipment may be associated with such a window, e.g. lights, curtains, shutters, etc. The pieces of equipment allocated to the window may be associated to each other in various fashions besides the fact that they are located at the same location. For example, they may be connected to each other by means of a wired bus, by means of which control signals are transmitted. Further or instead, they may share a power source. Also, they may have a common RF receiver for receiving command signals from the remote control 25. It will be understood that they each have a unique address as explained above, and, further, a type identifier may possibly be assigned to each. Further, it is understood that the common feature linking the units together can be registered by the master unit 25, when e.g. an auto-configuration is performed or when an update takes place, e.g. when a new piece of equipment is installed and added to the configuration. An example of a system, by means of which a number of elements are linked together, is described in WO 03/042480 A2.

In consequence hereof, the units which share such a commonality, may be allocated in an automatic manner when for instance on of the units are transferred to e.g. a group or a room.

For example, when the user is in the process of creating the grouping or sector corresponding to the room 3 in fig. 1, and the user has allocated the window operator 41 to the new room, he/she is establishing, the master unit may be configured to allocate also the awning operator 45 and the blinds operator 43 to the same room. Hereby the user will be spared the effort of selecting each of these. Similar may take place for the other windows 14, 15 and 16 in the room 3, whereby the time taken to create a room has been reduced considerably.

If the user should desire that one of the units should be allocated to e.g. another group or another zone, it is possible to select this unit on the master unit and assign it to the preferred group without interfering with the already established set-up.

Further, in accordance with the invention, when a sector is edited for example by removing a device, it may also be possible to have other related devices removed in correspondence with, what has been described above when creating e.g. a room.

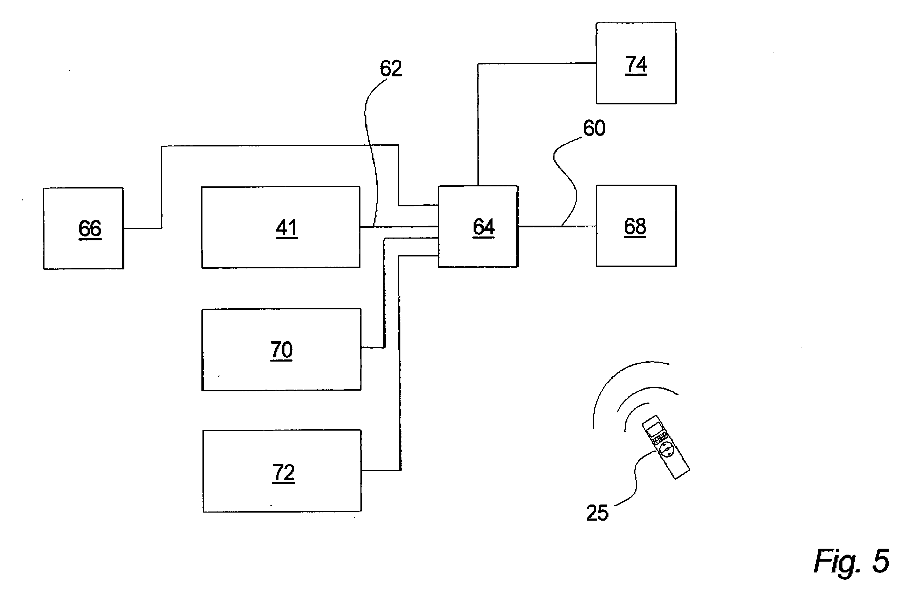

An example of a number of devices that are linked by a common feature will now be described with reference to fig. 5. This figure shows a block diagram of an integrated control or opening system for a window, a door, a closure, an aperture member or a similar component of a building. An operator, e.g. a window operator is generally designated 41. The operator 41 is connected by means of electric wires 62 to a connection box 64 which may serve as central control means for the illustrated system. The connection box 64 is also connected to a power supply 66.

A receiver module 68 is connected to the connection box 64 by means of a communication line 60, e.g. a wire communication.

Further, other specific modules of significance to the functionality of the control system, e.g. the window operator, may be connected to the connection box 64. For example, a sensor module 74, e.g. a rain sensor module may be connected to the connection box 64 in order to achieve automatic closing of e.g. an open window under certain circumstances, for example when a certain amount of moist is detected by the rain sensor 74. Other examples of such further modules which may be connected to the system may be temperature sensors, wind sensors, e.g. comprising an anemometer, motion detectors, intrusion detectors, glass break detectors, obstruction detectors or other forms of safety detectors etc.

As indicated in fig. 5, the connection box 64 may also be connected to further operator modules, e.g. 70 and 72, in order to control such operator modules as well. These further operator modules may be e.g. operators of window blinds, roller blinds, curtains, blackout curtains, awnings etc. and may be provided with power from the power supply 66 and possibly via the connection box 64.

Such an operator system may be controlled by signals received by the receiver module 68. These signals may be delivered to the receiver module by electrical wires, light guides or as shown, by means of a remote control 25.

In this example, the devices may be related due to the sharing of a power supply, the common connection box, the common receiver module etc.

Above, examples have been given relating to windows and devices associated with windows. However, it is obvious that other devices associated with home automation systems may be involved as well, e.g. for example lighting installations, where the light sources located in a room may be configured in a group together with e.g. the blinds located in the room, thereby making it easy to turn on the light with the remote control when the blinds in the room has been closed down, etc. Further examples may be for instance heating systems, e.g. the thermostats placed in a room, that may be adjusted when the windows are opened etc.

It will be understood that the invention is not limited to the particular examples described above and illustrated in the drawings but may be modified in numerous manners and used in a variety of applications within the scope of the invention as specified in the claims.

## Claims

1. System comprising at least one master unit (25) and a plurality of slave units, wherein said at least one master unit comprises means for transmitting control signals to said slave units via radio frequency channels, said slave units each being provided with a unique address and each being associated with a controllable device (41, 43, 45, 70, 72), **characterized in that** said at least one master unit (25) comprises means for configuring said slave units addressable by said master unit (25) in a number of sectors, wherein said master unit (25) further is designed in such a manner that when a slave unit is allocated to a sector, the master unit (25) is able to automatically allocate one or more further slave units to the same sector in dependence on properties related to said slave units.

2. System according to claim 1, wherein said properties related to said slave units relate to the type of device (41, 43, 45, 70, 72) associated with the slave unit, the location of the slave unit and/or the device, and/or another commonality linking said slave units.

3. System according to claim 2, wherein said properties related to said slave units relate to a device in the form of a sensor (74) to which the slave unit is coupled.

4. System according to claim 3, wherein said properties related to said slave units relate to the sensor (74) being a rain sensor, a temperature sensor, a wind sensor, a motion detector, an intrusion detector, a glass break detector or an obstruction detector.

5. System according to any of the preceding claims, wherein said master unit is adapted to arrange said slave units in such a manner that slave units having similar properties are arranged in a consecutive manner with a unique identification.

6. System according to claim 5, wherein the unique identification comprises a label and a number.

7. System according to any of the preceding claims, wherein said master unit (25) is designed to allow a user to modify the allocation of a slave unit provided by the automatic allocation.

8. System according to any of the preceding claims, wherein the master unit (25) comprises a storage unit, where said common property linking two or more slave units together is registered.

9. System according to any of the preceding claims, wherein said master unit (25) is configured to allow a user to name and/or re-name the slave units and/or sectors.

10. System according to one or more of claims 1 - 9, wherein the system comprises controllable devices (41, 43, 45, 70, 72), said controllable devices being adapted to be part of a home automation system.

11. System according to one or more of claims 1 - 10, wherein the system comprises controllable devices (41, 43, 45, 70, 72), said controllable devices being adapted to be located in a building, a house or an apartment.

12. System according to one or more of claims 1 - 11, wherein said properties related to said slave units relate to the controllable devices (41, 43, 45, 70, 72) being a window opening operator or a door opening operator.

13. System according to one or more of claims 1 - 12, wherein said properties related to said slave units relate to the controllable devices (41, 43, 45, 70, 72) being a heating system, a cooling system, an alarm system, lighting equipment or locks.

14. Method for operating a system comprising at least one master unit (25) and a plurality of slave units, wherein said at least one master unit (25) comprises means for transmitting control signals to said slave units via radio frequency channels, said slave units each being provided with a unique address and each being associated with a controllable device (41, 43, 45, 70, 72), **characterized in that** said slave units addressable by said master unit are configured in a number of sectors, whereby, when a slave unit is allocated to a sector, the master unit (25) is able to automatically allocate one or more further slave units to the same sector in dependence on properties related to said slave units.

15. Method according to claim 14, whereby said properties related to said slave units relate to the type of device (41, 43, 45, 70, 72) associated with the slave unit, the location of the slave unit and/or the device, and/or another commonality linking said slave units.

16. Method according to claim 15, whereby said properties related to said slave units relate to a device in the form of a sensor (74) to which the slave unit is coupled.

17. Method according to claim 16, whereby said properties related to said slave units relate to the sensor (74) being a rain sensor, a temperature sensor, a wind sensor, a motion detector, an intrusion detector, a glass break detector or an obstruction detector.

18. Method according to any of claims 14 - 17, whereby said master unit is adapted to arrange said slave units in such a manner that slave units having similar properties are arranged in a consecutive manner with a unique identification.

19. Method according to claim 18, wherein the unique identification comprises a label and a number.

20. Method according to any of claims 14 - 19, whereby said master unit is designed to allow a user to modify the allocation of a slave unit provided by said automatic allocation.

21. Method according to any of claims 14 - 20, whereby said common property linking two or more slave units together, is registered in a storage facility of said master unit (25).

22. Method according to any of claims 14 - 21, wherein said master unit (25) is configured to allow a user to name and/or re-name the slave units and/or sectors.

23. Method according to any of claims 14 - 22, wherein said controllable devices (41, 43, 45, 70, 72) are adapted to be part of a home automation system.

24. Method according to any of claims 14 - 23, wherein said controllable devices (41, 43, 45, 70, 72) are adapted to be located in a building, a house or an apartment.

25. Method according to any of claims 14 - 24, wherein said properties related to said slave units relate to the controllable devices (41, 43, 45, 70, 72) being a window opening operator or a door opening operator.

26. Method according to any of claims 14 - 25, wherein said properties related to said slave units relate to the controllable devices (41; 43, 45, 70, 72) being a heating system, a cooling system, an alarm system, lighting equipment or locks.

27. Method according to any of claims 14 - 26; further comprising operating one or more controllable devices (41, 43, 45, 70, 72).

28. Method according to claim 27, wherein said properties related to said slave units relate to the controllable devices (41, 43, 45, 70, 72) being a window or door actuator, operator or opener, or being blinds (42), a curtain, a shutter or an awning (20,21,22,23,44).

29. Method according to claim 27 or 28, comprising grouping of involved devices in sectors.

30. Method according to claim 29, wherein said sectors are overlapping each other.

31. Use of method according to one or more of claims 27 - 30 for initially configuring a system.

32. Use of method according to one or more of claims 27 - 30 for adapting a configuration of a system.

## Patentansprüche

1. System, umfassend wenigstens eine Master-Einheit (25) und mehrere Slave-Einheiten, wobei die wenigstens eine Master-Einheit Mittel umfasst zum Senden von Steuersignalen an die Slave-Einheiten über Funkkanäle, wobei die Slave-Einheiten je mit einer eindeutigen Adresse versehen sind, und wobei sie je einer steuerbaren Einrichtung (41, 43, 45, 70, 72) zugeordnet werden, **dadurch gekennzeichnet, dass** die wenigstens eine Master-Einheit (25) Mittel umfasst zum Konfigurieren der Slave-Einheiten, welche durch die Master-Einheit (25) ansteuerbar sind, in einer Anzahl von Sektoren, wobei die Master-Einheit (25) ferner derart gestaltet ist, dass, wenn eine Slave-Einheit einem Sektor zugewiesen wird, die Master-Einheit (25) in der Lage ist, automatisch eine oder mehrere weitere Slave-Einheit(en) demselben Sektor zuzuweisen, in Abhängigkeit von Eigenschaften, betreffend die Slave-Einheiten.

2. System nach Anspruch 1, wobei die Eigenschaften, betreffend die Slave-Einheiten, die Art der Einrichtung (41, 43, 45, 70, 72) betreffen, welche der Slave-Einheit zugeordnet wird, den Ort der Slave-Einheit und/oder der Einrichtung, und/oder eine weitere Gemeinsamkeit, welche die Slave-Einheiten verbindet.

3. System nach Anspruch 2, wobei die Eigenschaften, betreffend die Slave-Einheiten, eine Einrichtung in Form eines Sensors (74) betreffen, mit welchem die Slave-Einheit gekoppelt ist.

4. System nach Anspruch 3, wobei die Eigenschaften, betreffend die Slave-Einheiten, den Sensor (74) betreffen, wobei dieser ein Regensensor, ein Temperatursensor, ein Windsensor, ein Bewegungsmelder, ein Einbruchmelder, ein Glasbruchmelder oder ein Anwesenheitssensor ist.

5. System nach einem der vorhergehenden Ansprüche, wobei die Master-Einheit geeignet ist zum Anordnen der Slave-Einheiten, derart, dass die Slave-Einheiten, welche ähnliche Eigenschaften aufweisen, aufeinanderfolgend angeordnet werden, mit einer eindeutigen Kennung.

6. System nach Anspruch 5, wobei die eindeutige Kennung eine Bezeichnung und eine Zahl umfasst.

7. System nach einem der vorhergehenden Ansprüche, wobei die Master-Einheit (25) derart gestaltet ist, dass sie zulässt, dass ein Nutzer die Zuweisung einer Slave-Einheit ändert, welche durch die automatische Zuweisung bereitgestellt wird.

8. System nach einem der vorhergehenden Ansprüche, wobei die Master-Einheit (25) eine Speichereinheit umfasst, in welcher die gemeinsame Eigenschaft, welche zwei oder mehrere Slave-Einheiten miteinander verbindet, registriert wird.

9. System nach einem der vorhergehenden Ansprüche, wobei die Master-Einheit (25) derart gestaltet ist, dass sie zulässt, dass ein Nutzer die Slave-Einheiten und/oder die Sektoren benennt und/oder umbenennt.

10. System nach einem oder mehreren der Ansprüche 1 bis 9, wobei das System steuerbare Einrichtungen (41, 43, 45, 70, 72) umfasst, wobei die steuerbaren Einrichtungen geeignet sind, Teil eines Heim-Automatisierungssystems zu sein.

11. System nach einem oder mehreren der Ansprüche 1 bis 10, wobei das System steuerbare Einrichtungen (41, 43, 45, 70, 72) umfasst, wobei die steuerbaren Einrichtungen geeignet sind, sich in einem Gebäude zu befinden, in einem Haus oder in einer Wohnung.

12. System nach einem oder mehreren der Ansprüche 1 bis 11, wobei die Eigenschaften, betreffend die Slave-Einheiten, die steuerbaren Einrichtungen (41, 43, 45, 70, 72) betreffen, wobei diese ein Fensteröffnungsantrieb oder ein Türöffnungsantrieb sind.

13. System nach einem oder mehreren der Ansprüche 1 bis 12, wobei die Eigenschaften, betreffend die Slave-Einheiten, die steuerbaren Einrichtungen (41, 43, 45, 70, 72) betreffen, wobei diese ein Heizungssystem, ein Kühlungssystem, eine Alarmanlage, eine Beleuchtungsanlage oder Verriegelungen sind.

14. Verfahren zum Betreiben eines Systems, welches wenigstens eine Master-Einheit (25) und mehrere Slave-Einheiten umfasst, wobei die wenigstens eine Master-Einheit (25) Mittel umfasst zum Senden von Steuersignalen an die Slave-Einheiten über Funkkanäle, wobei die Slave-Einheiten je mit einer eindeutigen Adresse versehen sind, und wobei sie je einer steuerbaren Einrichtung (41, 43, 45, 70, 72) zugeordnet werden, **dadurch gekennzeichnet, dass** die Slave-Einheiten, welche durch die Master-Einheit ansteuerbar sind, in einer Anzahl von Sektoren konfiguriert werden, wobei, wenn eine Slave-Einheit einem Sektor zugewiesen wird, die Master-Einheit (25) in der Lage ist, automatisch eine oder mehrere weitere Slave-Einheit (en) demselben Sektor zuzuweisen, in Abhängigkeit von Eigenschaften, betreffend die Slave-Einheiten.

15. Verfahren nach Anspruch 14, wobei die Eigenschaften, betreffend die Slave-Einheiten, die Art der Einrichtung (41, 43, 45, 70, 72) betreffen, welche der Slave-Einheit zugeordnet wird, den Ort der Slave-Einheit und/oder der Einrichtung, und/oder eine weitere Gemeinsamkeit, welche die Slave-Einheiten verbindet.

16. Verfahren nach Anspruch 15, wobei die Eigenschaften, betreffend die Slave-Einheiten, eine Einrichtung in Form eines Sensors (74) betreffen, mit welchem die Slave-Einheit gekoppelt ist.

17. Verfahren nach Anspruch 16, wobei die Eigenschaften, betreffend die Slave-Einheiten, den Sensor (74) betreffen, wobei dieser ein Regensensor, ein Temperatursensor, ein Windsensor, ein Bewegungsmelder, ein Einbruchmelder, ein Glasbruchmelder oder ein Anwesenheitssensor ist.

18. Verfahren nach einem der Ansprüche 14 bis 17, wobei die Master-Einheit geeignet ist zum Anordnen der Slave-Einheiten, derart, dass die Slave-Einheiten, welche ähnliche Eigenschaften aufweise, aufeinanderfolgend angeordnet werden, mit einer eindeutigen Kennung.

19. Verfahren nach Anspruch 18, wobei die eindeutige Kennung eine Bezeichnung und eine Zahl umfasst.

20. Verfahren nach einem der Ansprüche 14 bis 19, wobei die Master-Einheit derart gestaltet ist, dass sie zulässt, dass ein Nutzer die Zuweisung einer Slave-Einheit ändert, welche durch die automatische Zuweisung bereitgestellt wird.

21. Verfahren nach einem der Ansprüche 14 bis 20, wobei die gemeinsame Eigenschaft, welche zwei oder mehrere Slave-Einheiten miteinander verbindet, in einer Speichereinrichtung der Master-Einheit (25) registriert wird.

22. Verfahren nach einem der Ansprüche 14 bis 21, wobei die Master-Einheit (25) derart gestaltet ist, dass sie zulässt, dass ein Nutzer die Slave-Einheiten und/oder die Sektoren benennt und/oder umbenennt.

23. Verfahren nach einem der Ansprüche 14 bis 22, wobei die steuerbaren Einrichtungen (41, 43, 45, 70, 72) geeignet sind, Teil eines Heim-Automatisierungssystems zu sein.

24. Verfahren nach einem der Ansprüche 14 bis 23, wobei die steuerbaren Einrichtungen (41, 43, 45, 70, 72) geeignet sind, sich in einem Gebäude zu befinden, in einem Haus oder in einer Wohnung.

25. Verfahren nach einem der Ansprüche 14 bis 24, wobei die Eigenschaften, betreffend die Slave-Einheiten, die steuerbaren Einrichtungen (41, 43, 45, 70, 72) betreffen, wobei diese ein Fensteröffnungsantrieb oder ein Türöffnungsantrieb sind.

26. Verfahren nach einem der Ansprüche 14 bis 25, wobei die Eigenschaften, betreffend die Slave-Einheiten, die steuerbaren Einrichtungen (41, 43, 45, 70, 72) betreffen, wobei diese ein Heizungssystem, ein Kühlungssystem, eine Alarmanlage, eine Beleuchtungsanlage oder Verriegelungen sind.

27. Verfahren nach einem der Ansprüche 14 bis 26, ferner umfassend Betreiben einer oder mehrerer steuerbarer Einrichtungen (41, 43, 45, 70, 72).

28. Verfahren nach Anspruch 27, wobei die Eigenschaften, betreffend die Slave-Einheiten, die steuerbaren Einrichtungen (41, 43, 45, 70, 72) betreffen, wobei diese Betätigungseinrichtungen, Antriebseinrichtungen oder Öffner für Fenster oder Türen sind, oder wobei diese Rollos, Jalousien oder Rollläden (42), ein Vorhang, Fensterläden oder eine Markise (20, 21, 22, 23, 44) sind.

29. Verfahren nach Anspruch 27 oder 28, umfassend Gruppieren von betroffenen Einrichtungen in Sektoren.

30. Verfahren nach Anspruch 29, wobei die Sektoren einander überlappen.

31. Gebrauch eines Verfahrens nach einem oder mehreren der Ansprüche 27 bis 30 zum erstmaligen Konfigurieren eines Systems.

32. Gebrauch eines Verfahrens nach einem oder mehreren der Ansprüche 27 bis 30 zum Anpassen einer Konfiguration eines Systems.

## Revendications

1. Système comprenant au moins une unité maître (25) et une pluralité d'unités esclaves, dans lequel ladite au moins une unité maître comprend un moyen pour transmettre des signaux de commande aux dites unités esclaves par le biais de canaux de radiofréquence, chacune desdites unités esclaves étant dotée d'une adresse unique et étant associée à un dispositif contrôlable (41, 43, 45, 70, 72), **caractérisé en ce que** ladite au moins une unité maître (25) comprend un moyen pour configurer lesdites unités esclaves pouvant être adressées par ladite unité maître (25) dans un nombre de secteurs, dans lequel ladite unité maître (25) est en outre conçue de manière à ce que, lorsqu'une unité esclave est allouée à un secteur, l'unité maître (25) est apte à allouer automatiquement une ou plusieurs autres unités esclaves au même secteur en fonction de propriétés associées aux dites unités esclaves.

2. Système selon la revendication 1, dans lequel lesdites propriétés associées aux dites unités esclaves concernent le type de dispositif (41, 43, 45, 70, 72) associé à l'unité esclave, l'emplacement de l'unité esclave et/ou du dispositif, et/ou une autre propriété commune reliant lesdites unités esclaves.

3. Système selon la revendication 2, dans lequel lesdites propriétés associées aux dites unités esclaves concernent un dispositif sous la forme d'un capteur (74) auquel l'unité esclave est couplée.

4. Système selon la revendication 3, dans lequel lesdites propriétés associées aux dites unités esclaves concernent le capteur (74) étant un capteur de pluie, un capteur de température, un capteur de vent, un détecteur de mouvement, un détecteur d'intrusion, un détecteur de vitre cassée ou un détecteur d'obstruction.

5. Système selon l'une quelconque des revendications précédentes, dans lequel ladite unité maître est apte à agencer lesdites unités esclaves de manière à ce que des unités esclaves ayant des propriétés similaires soient agencées consécutivement avec une identification unique.

6. Système selon la revendication 5, dans lequel l'identification unique comprend un libellé et un numéro.

7. Système selon l'une quelconque des revendications précédentes, dans lequel ladite unité maître (25) est conçue pour permettre à un utilisateur de modifier l'allocation d'une unité esclave fournie par l'allocation automatique.

8. Système selon l'une quelconque des revendications précédentes, dans lequel l'unité maître (25) comprend une unité de stockage dans laquelle ladite propriété commune reliant deux unités esclaves ou plus est enregistrée.

9. Système selon l'une quelconque des revendications précédentes, dans lequel ladite unité maître (25) est configurée pour permettre à un utilisateur de nommer et/ou renommer les unités esclaves et/ou les secteurs.

10. Système selon une ou plusieurs des revendications 1 à 9, dans lequel le système comprend des dispositifs contrôlables (41, 43, 45, 70, 72), lesdits dispositifs contrôlables étant aptes à faire partie d'un système domotique.

11. Système selon une ou plusieurs des revendications 1 à 10, dans lequel le système comprend des dispositifs contrôlables (41, 43, 45, 70, 72), lesdits dispositifs contrôlables étant aptes à être situés dans un bâtiment, une maison ou un appartement.

12. Système selon une ou plusieurs des revendications 1 à 11, dans lequel lesdites propriétés associées aux dites unités esclaves concernent les dispositifs contrôlables (41, 43, 45, 70, 72) constituant un opérateur d'ouverture de fenêtre ou un opérateur d'ouverture de porte.

13. Système selon une ou plusieurs des revendications 1 à 12, dans lequel lesdites propriétés associées aux dites unités esclaves concernent les dispositifs contrôlables (41, 43, 45, 70, 72) constituant un système de chauffage, un système de refroidissement, un système d'alarme, des équipements d'éclairage ou des verrouillages.

14. Procédé d'exploitation d'un système comprenant au moins une unité maître (25) et une pluralité d'unités esclaves, dans lequel ladite au moins une unité maître comprend un moyen pour transmettre des signaux de commande aux dites unités esclaves par le biais de canaux de radiofréquence, chacune desdites unités esclaves étant dotée d'une adresse unique et étant associée à un dispositif contrôlable (41, 43, 45, 70, 72), **caractérisé en ce que** lesdites unités esclaves pouvant être adressées par ladite unité maître sont configurées dans un nombre de secteurs, dans lequel, lorsqu'une unité esclave est allouée à un secteur, l'unité maître (25) est apte à allouer automatiquement une ou plusieurs autres unités esclaves au même secteur en fonction de propriétés associées aux dites unités esclaves.

15. Procédé selon la revendication 14, dans lequel lesdites propriétés associées aux dites unités esclaves concernent le type de dispositif (41, 43, 45, 70, 72) associé à l'unité esclave, l'emplacement de l'unité esclave et/ou du dispositif, et/ou une autre propriété commune reliant lesdites unités esclaves.

16. Procédé selon la revendication 15, dans lequel lesdites propriétés associées aux dites unités esclaves concernent un dispositif sous la forme d'un capteur (74) auquel l'unité esclave est couplée.

17. Procédé selon la revendication 16, dans lequel lesdites propriétés associées aux dites unités esclaves concernent le capteur (74) étant un capteur de pluie, un capteur de température, un capteur de vent, un détecteur de mouvement, un détecteur d'intrusion, un détecteur de vitre cassée ou un détecteur d'obstruction.

18. Procédé selon l'une quelconque des revendications 14 à 17, dans lequel ladite unité maître est apte à agencer lesdites unités esclaves de manière à ce que des unités esclaves ayant des propriétés similaires soient agencées consécutivement avec une identification unique.

19. Procédé selon la revendication 18, dans lequel l'identification unique comprend un libellé et un numéro.

20. Procédé selon l'une quelconque des revendications 14 à 19, dans lequel ladite unité maître est conçue pour permettre à un utilisateur de modifier l'allocation d'une unité esclave fournie par ladite allocation automatique.

21. Procédé selon l'une quelconque des revendications 14 à 20, dans lequel ladite propriété commune reliant deux unités esclaves ou plus est enregistrée dans une unité de stockage de ladite unité maître (25).

22. Procédé selon l'une quelconque des revendications 14 à 21, dans lequel ladite unité maître (25) est configurée pour permettre à un utilisateur de nommer et/ou renommer les unités esclaves et/ou les secteurs.

23. Procédé selon l'une quelconque des revendications 14 à 22, dans lequel lesdits dispositifs contrôlables (41, 43, 45, 70, 72) sont aptes à faire partie d'un système domotique.

24. Procédé selon l'une quelconque des revendications 14 à 23, dans lequel lesdits dispositifs contrôlables (41, 43, 45, 70, 72) sont aptes à être situés dans un bâtiment, une maison ou un appartement.

25. Procédé selon l'une quelconque des revendications 14 à 24, dans lequel lesdites propriétés associées aux dites unités esclaves concernent les dispositifs contrôlables (41, 43, 45, 70, 72) constituant un opérateur d'ouverture de fenêtre ou un opérateur d'ouverture de porte.

26. Procédé selon l'une quelconque des revendications 14 à 25, dans lequel lesdites propriétés associées aux dites unités esclaves concernent les dispositifs contrôlables (41, 43, 45, 70, 72) constituant un système de chauffage, un système de refroidissement, un système d'alarme, des équipements d'éclairage ou des verrouillages.

27. Procédé selon l'une quelconque des revendications 14 à 26, comprenant en outre l'exploitation d'un ou plusieurs dispositifs contrôlables (41, 43, 45, 70, 72).

28. Procédé selon la revendication 27, dans lequel lesdites propriétés associées aux dites unités esclaves concernent les dispositifs contrôlables (41, 43, 45, 70, 72) constituant un actionneur de fenêtre ou de porte, un opérateur ou un ouvreur, ou constituant des stores (42), un rideau, un volet ou un auvent (20, 21, 22, 23, 44).

29. Procédé selon la revendication 27 ou 28, comprenant le regroupement de dispositifs impliqués en secteurs.

30. Procédé selon la revendication 29, dans lequel lesdits secteurs se chevauchent.

31. Utilisation du procédé selon une ou plusieurs des revendications 27 à 30 pour la configuration initiale d'un système.

32. Utilisation du procédé selon une ou plusieurs des revendications 27 à 30 pour adapter une configuration d'un système.
